(19) Europäisches Patentamt
European Patent Office
Office européen des brevets

(11) **EP 4 483 137 B1**

(12) **EUROPEAN PATENT SPECIFICATION**

(45) Date of publication and mention
of the grant of the patent:
**08.04.2026  Bulletin 2026/15**

(21) Application number: **23708429.8**

(22) Date of filing: **23.02.2023**

(51) International Patent Classification (IPC):
**G01B 11/27** *(2006.01)*     **G02B 23/02** *(2006.01)*

(52) Cooperative Patent Classification (CPC):
**G02B 23/02**

(86) International application number:
**PCT/EP2023/054633**

(87) International publication number:
**WO 2023/161390 (31.08.2023 Gazette 2023/35)**

(54) **TELESCOPE WITH OPTICAL ALIGNMENT SYSTEM**

TELESKOP MIT OPTISCHEM AUSRICHTUNGSSYSTEM

TÉLESCOPE AVEC SYSTÈME D'ALIGNEMENT OPTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.02.2022  GB 202202543**

(43) Date of publication of application:
**01.01.2025  Bulletin 2025/01**

(73) Proprietor: **Cambridge Enterprise Limited Cambridge, Cambridgeshire CB2 1TN (GB)**

(72) Inventors:
• **HAWKER, George**
**Cambridge Cambridgeshire CB1 3QY (GB)**
• **PARRY, Ian Robert**
**Cambridge Cambridgeshire CB4 2JJ (GB)**

(74) Representative: **Herrero & Asociados, S.L.**
**Edificio Aqua - Calle Agustín de Foxá, 4-10, 2ºA**
**28036 Madrid (ES)**

(56) References cited:
WO-A1-2016/126302     WO-A1-2021/018634
US-A- 5 274 479     US-A1- 2010 053 634
US-B1- 6 559 948

## Description

FIELD

This invention relates generally to optical alignment techniques for telescopes, for example space-based telescopes.

BACKGROUND

The optics of a telescope have to be accurately aligned with respect to each other in order for the telescope to work properly. Alignment can include placing the individual optics, placing segments of a single optic (large telescopes often have segmented primary mirrors), and controlling the shape of a deformable mirror. For diffraction limited telescopes, some of the optical elements have to be positioned with respect to one another to within a fraction of a wavelength of light. As used in this specification references to light include non-visible light e.g. infrared (IR) or ultraviolet (UV) light.

This specification describes alignment techniques for telescopes. The techniques described are useful for all telescopes but can be particularly useful for space-based telescopes.

A telescope may need some initial alignment, e.g. if it is unfolded and deployed in space. After the telescope is accurately aligned the alignment will need to be maintained. Alignment drift can be caused by many things including variations of temperature, variations of gravity vector, wind buffeting, and acoustic vibrations. Accurate alignment can be especially important for imaging applications as these may require a large-area flat field.

Most telescope structures employ passive techniques to deal with these variations. Some telescopes use a distant external light source, e.g. a star, to measure wavefront error i.e. alignment error. However this is not suitable, e.g., for a space-based telescope imaging the earth.

A telescope can be aligned using a flat mirror placed ahead of the telescope so that light from an internal source will return back through the telescope. If the flat mirror is perfect, the measured wavefront errors will only be due to the telescope. However this can be inconvenient, and the telescope cannot be used to view distant objects while the flat test mirror is in place.

McCann et al., "A new mirror alignment system for the VERITAS telescopes", Astroparticle Physics 32 (2010) 325-329, describes a system for aligning a telescope using a star. The telescope has a segmented mirror and the mirror segments are referred to as "facets". Vazquez-Montiel, "Method For Facets' Alignment For The High-Flux Solar Furnace At Cie-Unam In Temixco, Mexico. First Stage" http://www.concentracionsolar.org. mx/images/pdf/memorias/05 sp12 sv.pdf, also describes a solar concentrator with a segmented mirror in which the mirror segments are referred to as facets. Both these systems lack mirror facets as defined herein. Kishner, "High-bandwidth alignment sensing in active optical systems" Proc. SPIE 1532, Analysis of Optical Structures, 1 December 1991, describes an optical alignment system that attaches retroreflectors to a primary mirror; since these reflect back along the incoming light path they do not need angular alignment. Zhao et al., "Simultaneous multi-piston measurement method in segmented telescopes", Optics Express 24540, Vol. 25 (20), 2 Oct 2017, describes the use of modulation transfer function sidelobes to measure mirror segment piston error. WO2021/018634 describes a diffraction grating-based alignment system for a telescope with a segmented mirror. Further background prior art can be found in US5,274,479, WO2016/126302 and US2018/0074236.

SUMMARY

In one aspect there is therefore described a telescope with an optical alignment system according to claim 1.

The telescope comprises a segmented primary mirror, the segmented primary mirror having a plurality of mirror segments. Each mirror segment has a segment surface defining part of an imaging surface of the primary mirror. The imaging surface of the primary mirror may, but need not be, the first surface of the telescope.

Each mirror segment has a mirror facet. A direction of light reflected from the mirror facet defines an orientation of the segment surface of the mirror segment, i.e. the facet has a fixed orientation with respect to the segment surface. Thus an orientation of the segment surface of the mirror segment can be determined from the direction of light reflected from the mirror facet.

In implementations the, i.e. each, mirror facet is configured to reflect light in a different direction to light reflected from the segment surface of the mirror segment. In general the light reflected from the mirror facets converges towards a metrology system.

A light source, in implementations an internal light source, is configured to illuminate the mirror facet of each mirror segment. In this context an internal light source may be a light source which is not located beyond a front aperture of the telescope.

As indicated above, a metrology system located to receive light from the light source after reflection by the mirror facet of each mirror segment. The received light characterizes an optical alignment of the mirror segments. The metrology system may include an imaging system, e.g. a camera, to capture an image of the received light, such as locations of the reflections from the mirror facets and/or interference fringes generated by overlapping reflections.

Some implementations of the telescope provide excellent sensitivity to various types of mirror segment misalignments. The telescope may be configured to automate the alignment process.

In another aspect there is provided a method of aligning a telescope according to claim 12, the telescope is in particular as described above, the method using a light source to illuminate the mirror facet of each mirror segment, and moving one or more of the mirror segments to align a reflection from the mirror facet of each mirror segment.

The aligning may include correcting tilt misalignments of the mirror segments, by tilting one or more of the mirror segments such that reflections from the mirror facet of each mirror segment are coincident. Also or instead the aligning may include correcting translational misalignments of the mirror segments along an optical axis of the telescope, by moving one or more of the mirror segments in piston such that reflections from the mirror facet of each mirror create interference fringes.

The mirror segment surfaces may also be provided with a diffraction grating, illuminated by a monochromatic light source to generate a diffraction pattern. The method may then include determining one or more characteristics of the diffraction pattern, and correcting a mirror segment misalignment by moving one or more of the mirror segments in response to the one or more characteristics. Various characteristics of the diffraction pattern may be measured, depending on the correction to be made.

DRAWINGS

These and other aspects of the invention are further described, by way of example only, with reference to the accompanying Figures.

Figure 1 shows a metrology system with an internal light source according to the prior art.

Figure 2 shows a schematic illustration of a telescope including an optical alignment system.

Figure 3 shows an example of a mirror segment with a facet at an edge of the segment.

Figure 4 shows an image captured by the metrology system.

Figures 5a and 5b show an optical alignment system with a defocussed image plane, and an example implementation of the optical alignment system.

Figures 6a-6d illustrate stages in the progressive alignment of a telescope.

Figures 7a-7d show, respective simulations of the pupil of a pair of circular mirror segments, a point spread function (PSF) of the pair of mirror segments, a modulation transfer function (MTF) of the pair of mirror segments, and a cross-section through the MTF illustrating sidelobes of the MTF.

Figure 8 shows MTF sidelobes for monochromatic and broadband light as optical path difference (OPD) between the pair of mirror segments of Figure 7 increases.

Figures 9a-9c show, respectively, MTF sidelobe height as a function of OPD for a simulated dual wavelength light source, for broadband light sources, and from an experimental example.

Figures 10a and 10b show interference fringes and the corresponding MTF between each segment pair of a three mirror segment telescope, and the combined interference fringes and corresponding MTF.

Figure 11 illustrates an example prototype telescope.

In the figures like elements are indicated by like reference numerals.

DESCRIPTION

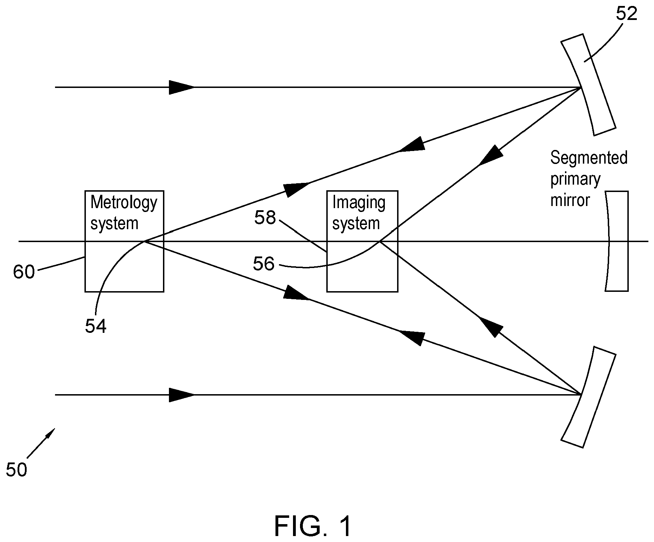

Figure 1 shows a schematic illustration of a telescope 50 including an alignment system. A metrology system 60 is located at a centre of curvature 54 of a segmented primary mirror 52. The metrology system 60 is twice as far from the mirror as an imaging system 58 located at a focal point 58 of the primary mirror.

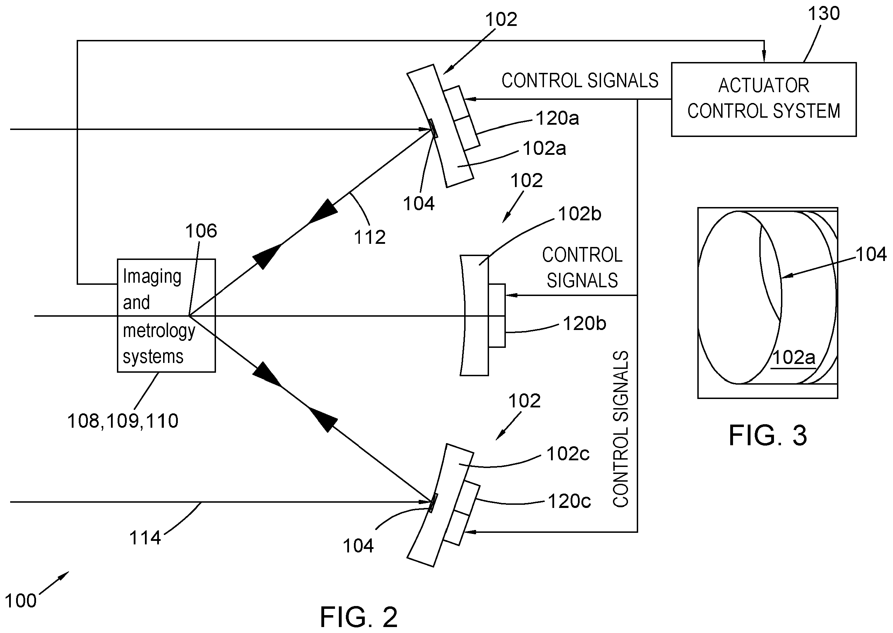

Figure 2 shows a schematic illustration of a telescope 100 including an optical alignment system which uses the techniques described herein. In Figure 2 a segmented primary mirror 102 is formed from a set of mirror segments 102a-c, each mirror segment having a segment surface defining part of an imaging surface of the primary mirror 102. Each of a plurality of these mirror segments, e.g. mirror segments 102a,b in Figure 2, has at least one mirror facet 104. Because a facet has a fixed orientation with respect to the segment surface a direction of light reflected from the mirror facet defines an orientation of the segment surface of the mirror segment. A facet may be considered to define a reference surface for the corresponding segment surface. This reference surface can be used to align the mirror segments, as described later.

In Figure 2 the facet 104 is in the middle of a mirror segment, but the facets can be located at any position on the surface. Figure 3 shows an example of a mirror segment in which the facet 104 is at an edge of the segment, which may be easier to fabricate.

A facet may have a flat or a curved surface. For example the surface of a facet may be curved, e.g. it may have spherical curvature, to focus light from the light source onto the metrology system. Typically an area of the facet 104 is small compared with the total reflective surface area of the mirror segment, e.g. less than 10% of the total surface area. Thus generally as used herein a facet is a part of the segment surface that directs light in a different direction to the segment surface e.g. it may have a focus that is displaced away from a focal surface of the telescope. As used herein, references to the segment surface are to the part of the segment surface defining part of the imaging surface of the primary mirror i.e. the part of the segment surface other than the facet. Sometimes this may be referred to as the main part of the mirror segment surface.

Various techniques may be used to fabricate a mirror segment with a mirror facet. For example diamond turning or other precision freeform CNC (Computer Numerical Control) manufacturing methods may be used.

Rays 114 indicate light from a distant object viewed by the telescope. These are focused by segmented primary mirror 102 towards a focal point 106 of the telescope where, for example, an imaging system 108, or other optical system, is located.

The telescope includes a light source 109, in implementations an internal light source, and a metrology system 110. Here an internal light source is one which is not located beyond a front aperture of the telescope. Light from light source 109 will be referred to as metrology light. In implementations the light source is a point source of the metrology light.

In the example of Figure 2 the light source is co-located with the metrology system and rays 112 indicate a metrology light path from the light source 109 to the primary mirror 102, and back to the metrology system 110. The light source is arranged to illuminate the mirror facet of each mirror segment, and the light reflected from the facets characterizes the optical alignment of the mirror segments. In implementations the metrology system 110 includes a detector e.g. an image sensor to capture an image of the metrology light reflected from the facets.

In Figure 2 the imaging system 108 and the metrology system 110 are both at the focal point 106, but in other arrangements the metrology system may be located at a position displaced away from a focal surface of the telescope. The techniques described herein may be used with many different telescope designs, including catadioptric designs. For example a Cassegrain design can facilitate location of the light source 109, metrology system 110, and focal point 106 at different positions along an optical axis of the telescope. In general however, as seen by comparing Figures 1 and 2, the techniques described herein enable the length of the telescope to be approximately halved. This can be particularly important in space-based applications.

The optical path defined by reflection of rays 114 at the primary mirror 102 is different to the optical path defined by reflection of rays 112 at primary mirror 102, because the metrology light is reflected by the facets whereas the rays 114 from the distant object are reflected by the main part of each mirror segment. In general the mirror facet 104 is configured to reflect light in a different direction to light reflected from the main part of the mirror segment surface.

In general the imaging surface of the primary mirror 102 is configured to focus light to a focal surface or focal plane. Typically but not necessarily it is the first surface of the telescope and defines a light collecting aperture for the telescope. There can be many optical elements between the light collecting aperture and an imaging region of the telescope; in the Figures herein these are omitted for simplicity.

One advantage of directing metrology light using reflective facets rather than, say, a diffractive approach is that reflection is compatible with use of a broadband light source. As described later a broadband light source can be useful in aligning the mirror segments in piston.

The metrology light can be used to determine an alignment of the mirror segments 102a-c, and in implementations also to automatically align the mirror segments to one another. Thus in implementations the telescope comprises a set of actuators 120a-c and each of the mirror segments (or at least all except one of the mirror segments) is provided with a respective actuator to move the mirror segment. For example a mirror segment may be moveable by an actuator in tip/tilt and/or piston.

In implementations a mirror segment actuator comprises a three point ("Maxwell-type") mount with three linear actuator devices spaced around an edge of the mirror segment. In such an arrangement moving any one linear actuator device rotates the mirror segment in tip and/or tilt about an axis running through the points of contact made by the other two linear actuator device, and piston adjustments may be made by moving all three linear actuator devices in unison.

In implementations the actuators 120a-c are controlled by control signals from an actuator control system 130 coupled to the metrology system 110, to align the mirror segments. More particularly the metrology system is configured to capture an image of the light from the light source after reflection by each of the mirror facets, and the actuator control system is configured to control the set of actuators dependent upon the captured image to move the mirror segments to align the reflections from the mirror facets of the mirror segments.

**The mirror** segments may be aligned to stack sub-images from the mirror segments and/or to co-phase the mirror segments, i.e. to align the mirror segments to reduce optical path differences (OPDs) between the segment surfaces of the mirror segments and a focal point of the telescope to less than $\lambda_{op}$, where $\lambda_{op}$ is a wavelength of operation of the telescope. This is described in more detail below.

As a preliminary to an alignment procedure for the telescope, depending on an initial degree of alignment, each of the mirror segments may be scanned in tip/tilt so that the image sensor of the metrology system sees a reflection from each facet. The mirror segments may also be co-focussed i.e. moved in piston to align the mirror segments to within a depth of focus of the mirror segments e.g. ~0.1mm. This may, but need not, involve using the reflected light from the mirror facets. For example, where the facets have a curved surface to focus the metrology light onto the metrology system the mirror segments may be moved in piston to maximize the contrast of an image of the metrology light source from each facet, e.g. by minimizing a gradient of the Modulation Transfer Function (MTF) of the image of the light source from the facet.

The automatic alignment procedure starts by using the actuator control system to control the set of actuators, dependent upon the image of the metrology light captured by the metrology system, to tilt the one or more mirror segments to align the reflections from the mirror facets of the mirror segments such that the reflections are laterally coincident with one another in the captured image, i.e. to stack the sub-images from the mirror segments. (Although "tip" and "tilt" are generally used to refer to rotation about two orthogonal axes in this specification sometimes "tilt" is used as shorthand to refer to rotation about either axis, for conciseness.)

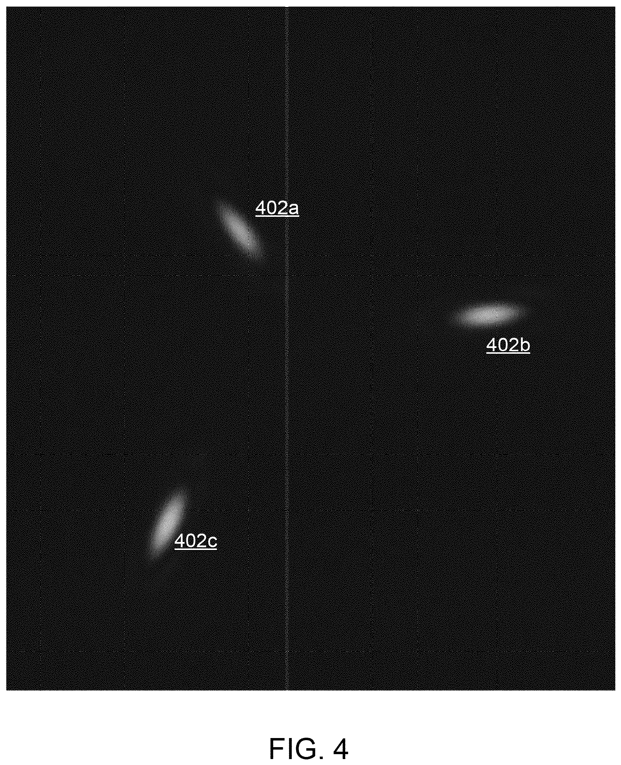

Figure 4 shows an image captured by the metrology system 110 comprising a sub-image 402a-c from the mirror facet of each of the mirror segments 102a-c. The actuator control system controls the actuators to tilt the respective mirror segments to stack, i.e. laterally align, the sub-images so that they are coincident. An angular tip/tilt movement $\alpha$ of a mirror segment leads to displacement $\alpha v$ of a sub-image in an image plane at distance v, or $M\alpha v$ if the metrology system has magnification M. This displacement can be corrected by e.g. linear displacement $\delta$ of a linear actuator device about a notional pivot at distance s from the device such that $\alpha = \delta/s$. The tilt of each of the mirror segments can be adjusted in this manner to move the sub-images until they coincide.

**In some implementations** a position error can be calculated and the corresponding mirror adjusted to correct this. In some implementations a closed-loop control system can be used to control the actuators to align the sub-images.

Ideally tip/tilt misalignment of the mirror segments should be reduced to less than $\lambda_{op}/D$ where D is a (maximum) lateral dimension of the primary mirror 102, for diffraction-limited angular resolution. A fine-alignment process can be used to improve correction of the misalignment. This involves separating each of the sub-images in order that the lateral position of each can be more accurately measured, as accurate measurement of their positions becomes difficult when they start to overlap.

One way to do this is to use a shutter to select individual mirror segments to determine the sub-image position. Another way is to spatially separate the sub-images using an additional detector e.g. a second image sensor, in a defocussed plane. This latter approach has an advantage that all the mirror segments can be measured and corrected simultaneously; it also facilitates fine-alignment process using a closed-loop control system. In such arrangements the metrology system can include a first image sensor to capture the image of the received light from the light source after reflection by each of the mirror facets, and a second an image sensor configured to capture a defocussed image of the received light. When the reflections are coincident with one another the reflections captured by the defocussed image are spatially separate from one another.

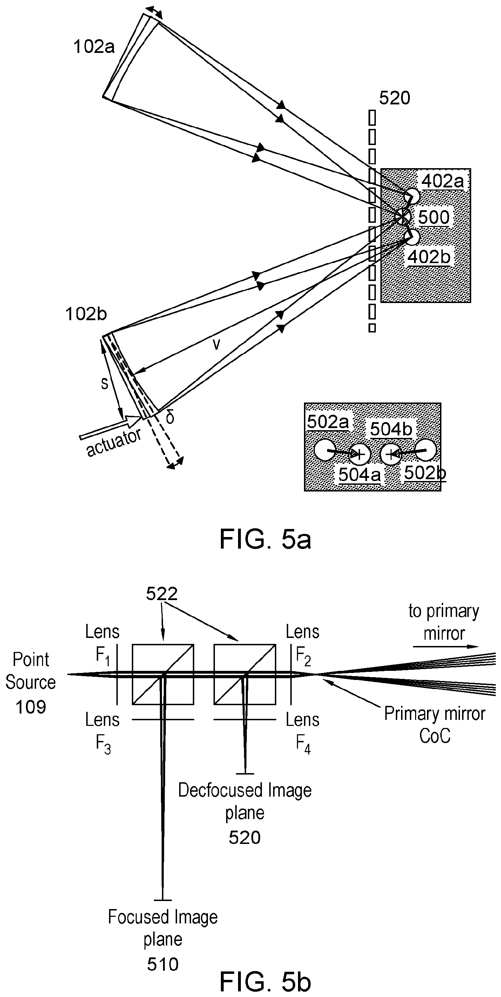

Figure 5a illustrates such a system in which sub-images 402a,b correspond to defocussed sub-images 502a,b in what may be termed a defocussed image plane 520. Sub-images 402a,b are moved to coincide at a position 500 in the image plane, corresponding to target positions 504a,b in the defocussed image plane 520. Figure 5b shows an example implementation in which a pair of beam splitters 522 are used to obtain focussed image plane 510 and defocussed image plane 520 (the image sensors are not shown, for clarity). In the example of Figure 5b the (point) light source 109 is co-located with the metrology system, but other arrangements are possible.

Once the sub-images have been stacked the mirror segments can be co-phased to reduce the OPD between them due to misalignment in piston i.e. misalignment along an optical axis, e.g. z-axis, of the telescope. More particularly the actuator control system controls the set of actuators dependent upon a captured (focussed) image of the light from the light source, to move the mirror segments in piston to obtain interference fringes in the captured image.

The interference fringes are created by interference between the overlapping sub-images of the metrology light from each of the mirror segments. In implementations, in order to use interference fringes to reduce the OPD between mirror segments the light source employs a broadband light source, e.g. a white light source such as a white LED, so that fringes only appear when the OPDs are matched.

More specifically in implementations the light source has a coherence length that is less than $1000\mu m$, $100\mu m$ or $10\mu m$, for example of order $1\mu m$. Fringes only appear when the OPDs are matched to within the coherence length of the light source. In implementations where the mirror segments are already aligned to within a depth of focus of the telescope the light source may have a coherence length that is less than the depth of focus of the telescope. In one example, where the facets define a spherical curved surface, the fringes can appear at a centre of curvature of the facets.

In implementations the actuator control system is configured to control the set of actuators to maximise a measure of visibility of the interference fringes. The visibility of the interference fringes may be defined in a standard manner, e.g. $\frac{I_{max}-I_{min}}{I_{max}+I_{min}}$ where $I_{max}$ and $I_{min}$ are respectively the maximum and minimum fringe light intensities. As described below, in some implementations the measure of visibility of the interference fringes comprises a measurement of a height of one or more sidelobes of a modulation transfer function of the interference fringes.

In principle monochromatic metrology light of just two different wavelengths will generate interference fringes with a varying visibility, but then the appearance of fringes does not define a unique position for each mirror segment. The use of multiple monochromatic wavelengths can narrow down the range of uncertainty. The degeneracy is broken by using a broadband source as then fringes only appear if the OPDs match to within a coherence length of the light, which is very small. Thus the system can be arranged so that there are no fringes if the OPDs do not match to better than $\lambda_{op}$. The broadband light source may e.g. have a FWHM (Full Width at Half Maximum) bandwidth of greater than 10nm, 50nm or 100nm. A shorter coherence length, broader bandwidth source can provide a more accurate piston error measurement.

To identify a position when an OPD is matched all the mirror segments except one may be fixed and the position of one of the mirror segments scanned in piston until fringes appear. These fringes are formed when the OPD between the scanned mirror segment and one of the other mirror segments is sufficiently small, and comprise parallel fringes oriented perpendicular to a line between the mirror segments. When the mirror segment is scanned another set of parallel fringes is obtained, rotated at an angle to and crossing the first set of fringes, corresponding to a rotational angle between pairs of mirror segments generating the fringes and generating a criss-cross pattern. Successive mirror segments may be scanned in this way generating a pattern of dots when the OPDs are all matched.

Thus the actuator control system may control the set of actuators to obtain overlapping sets of fringes in which each set of fringes has an orientation direction defined by an orientation of a respective pair of the mirror segments. The actuator control system may control the set of actuators to obtain overlapping fringes of multiple different orientations.

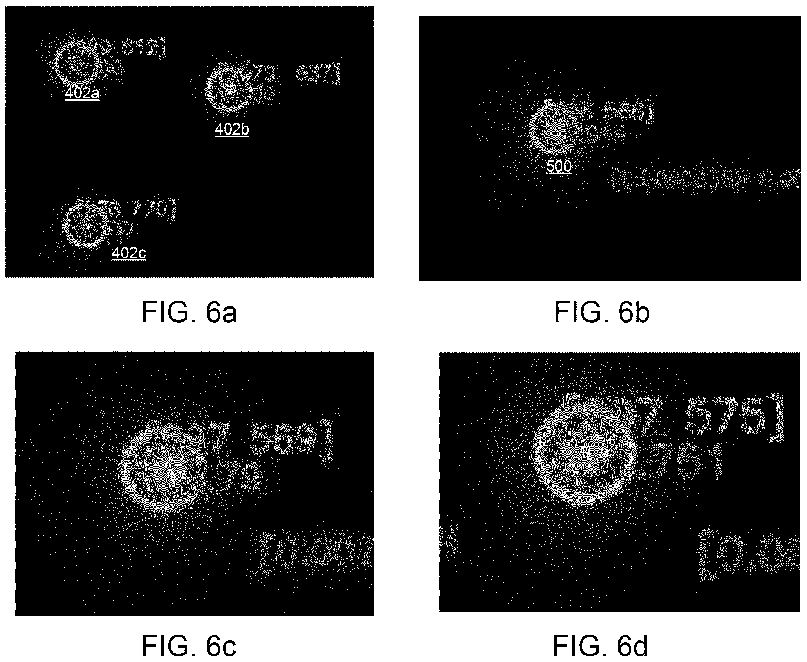

Figure 6 shows images captured by the metrology system of an example telescope during alignment, illustrating stages in the alignment process. Thus Figure 6a shows three sub-images 402a-c before stacking, Figure 6b shows the sub-image stacked at position 500, Figure 6c shows interference fringes from the facets of a pair of mirror segments with matched OPDs, and Figure 6d shows interference fringes from the facets of a set of three mirror segments with matched OPDs.

As explained above, as a mirror segment is scanned an interference pattern emerges. Where the light source comprises a broadband light source the zeroth fringe is uniquely identified, as then the zeroth fringe has a unique location of maximum visibility.

However in one variant, rather than using broadband light the light source may comprise a source of three or more different monochromatic wavelengths, or a source of at least two separate wavelengths one of which is tunable. Then interference fringes may be sought, e.g. by the above scanning process, using two of the wavelengths and when interference fringes are found one of the wavelengths may altered, by substituting another of the monochromatic wavelengths or by changing a tuning of the wavelength. When the zeroth order position has been located the visibility of the fringes should be substantially unchanged, but if a different fringe order has been found the fringe visibility will reduce or the fringes disappear.

Thus where the light source comprises light of two different monochromatic wavelengths the degeneracy can also be broken by changing one of these wavelengths. For example **the actuator** control system may be configured to control the set of actuators dependent upon the captured image to move the mirror segments in piston such that the interference fringes remain substantially stationary when the wavelength of one of the different monochromatic wavelengths, e.g. the wavelength of a tuneable light source, is changed.

As described above, one way to measure the visibility of the fringes is to use the modulation transfer function (MTF) of the metrology system. As the MTF is defined by the (magnitude of the) Fourier transform of the PSF (Point Spread Function), where the light source is a point source the MTF can be determined from a Fourier transform of the light captured by an image sensor (in a focussed image plane) of the metrology system. More specifically the height of the MTF sidelobes is a measure of the visibility of the fringes, and the visibility can be maximised by maximising the sidelobe height.

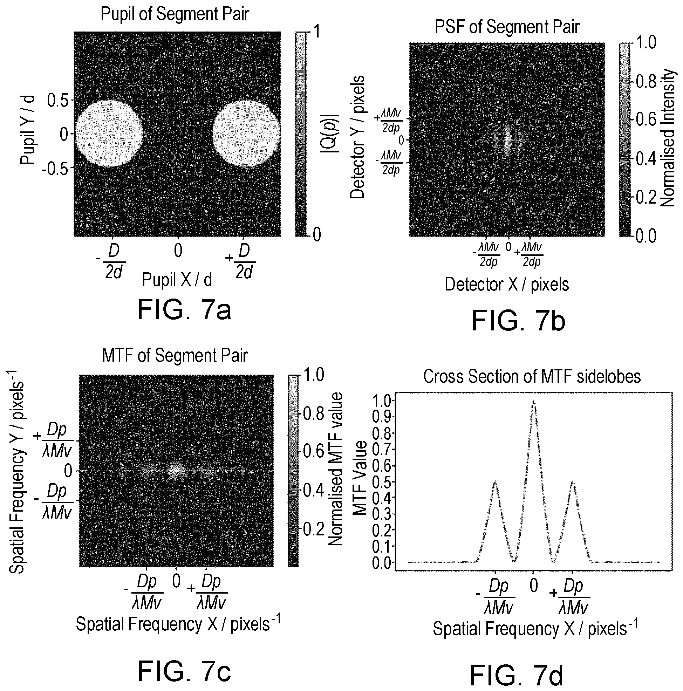

Figure 7 illustrates the results of a simulation for monochromatic light of wavelength $\lambda$, showing the pupil of a pair of circular mirror segments (Figure 7a), the PSF of the segment pair (Figure 7b), the MTF of the segment pair (Figure 7c), and a cross-section along the dashed line across the MTF illustrating the MTF sidelobes (Figure 7d). In the example of Figure 7a the mirror segments have diameter $d$ and separation D, the metrology system has magnification M, the metrology image plane is at distance v from the mirror segments, and p is the image sensor pixel size.

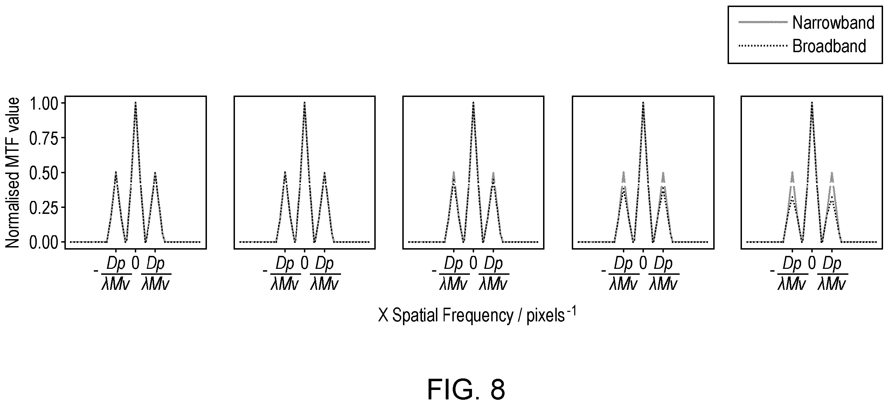

For a phase difference $\beta$ between a pair of mirror segments, due to piston misalignment, the OPD between the mirror segments is $2\beta$ (due to the reflection). As $\beta$ increases the fringe phase (position) varies cyclically with period $\lambda/4$, and with broadband light the fringes are gradually smeared out. Figure 8 shows the sidelobes for both monochromatic and broadband light for (from left to right) $\beta$ = 0, $\lambda/8$, $\lambda/4$, $3\lambda/8$, $\lambda/2$, showing that with broadband light the sidelobe height decreases with fringe visibility.

The sidelobe height, H, can be calculated as:

$$H(\beta) \approx \int_{\lambda_{min}}^{\lambda_{max}} \frac{A(\lambda)}{2} e^{\frac{4\pi i}{\lambda}\beta} d\lambda$$

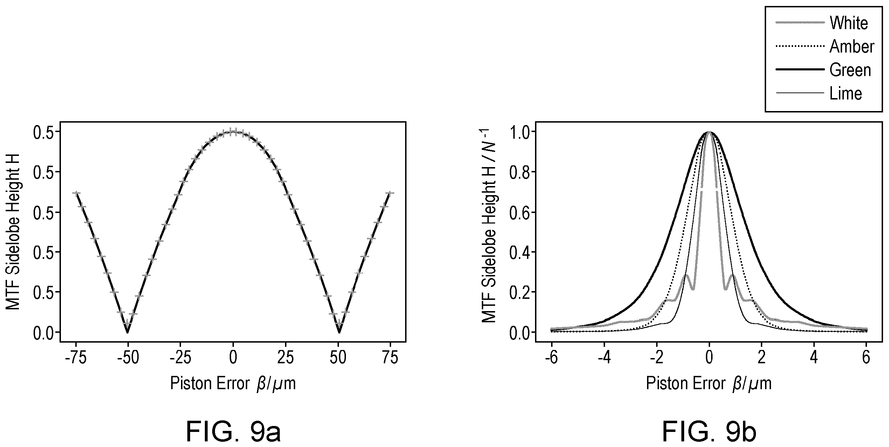

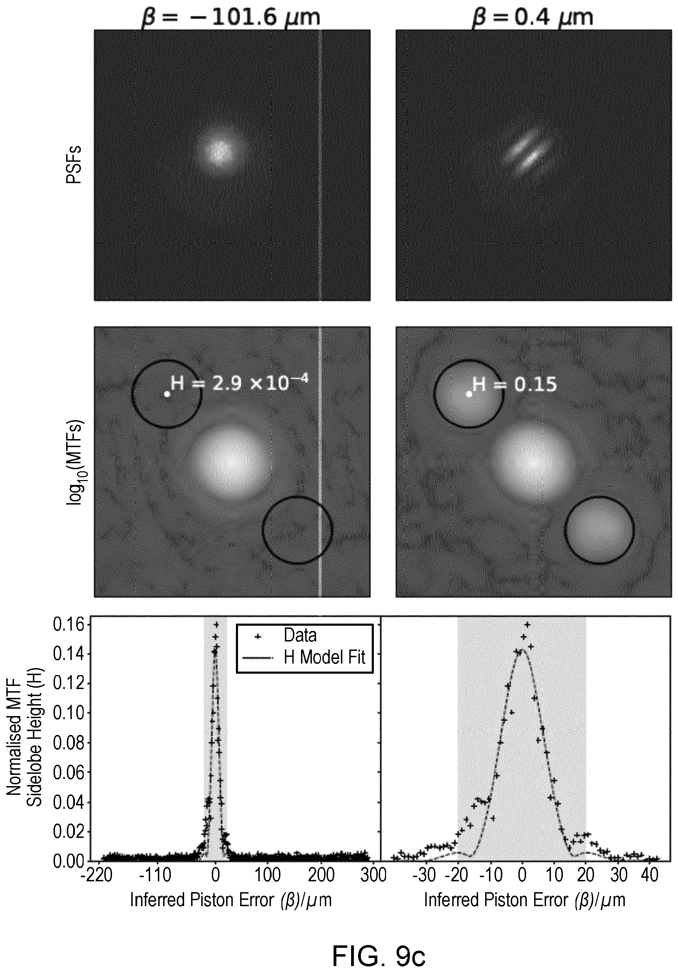

where $A(\lambda)$ is the spectrum of the metrology light intensity and the integral is over a wavelength range for the metrology light, e.g. from a minimum wavelength $\lambda_{min}$ to a maximum wavelength $\lambda_{max}$ that together define wavelength limits of the metrology light source. Figure 9a shows the sidelobe height, H as a function of piston error $\beta$ for a dual wavelength spectrum ($\lambda_1 = 633nm$, $\lambda_2 = 635nm$). Dual wavelengths produce many visible maxima spaced by $\lambda/2$. Figure 9b shows the calculated sidelobe height, H as a function of piston error $\beta$ for actual white, amber, green and lime LED spectra. The FWHM of the curves are, respectively 0.73$\mu m$, 1.9$\mu m$, 2.9$\mu m$ and 1.3 $\mu m$, which corresponds to the coherence length of the LEDs. A broadband source produces a single global maximum in H at zero OPD. Figure 9c illustrates an experimental example, showing how fringes appear at $\beta = 0.4\mu m$.

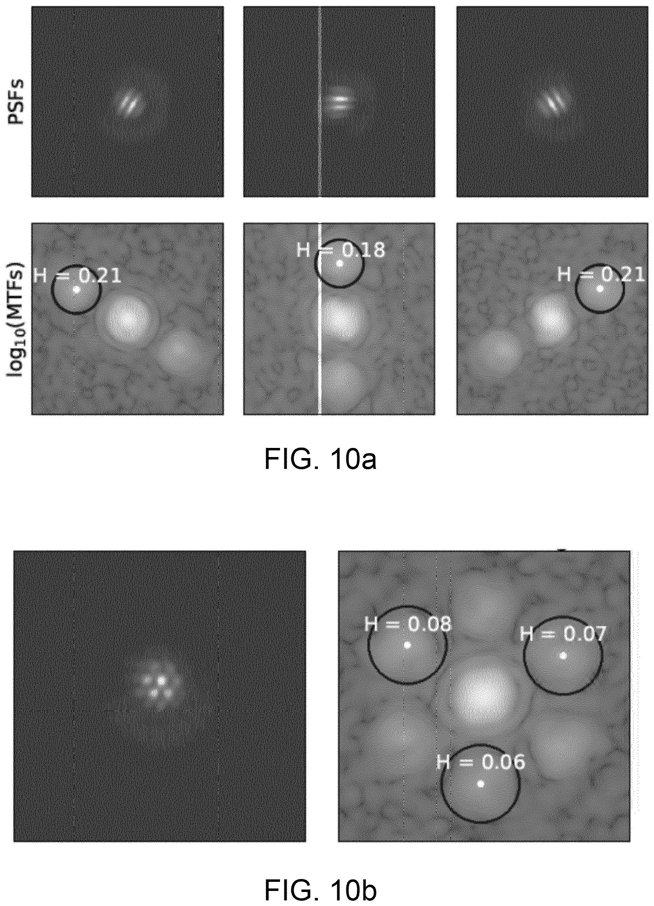

Figure 9c shows fringes for a pair of mirror segments. The fringe visibility can be measured for multiple mirror segments e.g. if they have MTF sidelobes that do not overlap when they are imaged by the metrology system. This can be achieved by suitably arranging the mirror segment positions, and/or by using a mask or shutter. As an example Figure 10a shows the interference fringes (PSF) between each segment pair of three of mirror segments arranged at 120° to one another, and the corresponding MTFs; and Figure 10b shows the combined PSF and non-overlapping MTF.

In one example alignment process mirror segment pairs are systematically scanned in piston to find interference fringes. For example with N mirror segments this can involve keeping a reference mirror segment stationary and scanning the remaining N-1 segments. Thus the set of actuators may be controlled to move multiple each of the N or N-1 mirror segments sequentially in piston to obtain interference fringes from each pair of mirror segments amongst the set of N.

Once fringes are found the OPD of a mirror segment pair is minimised by maximising the MTF sidelobe height e.g. by finely scanning a mirror segment position. This can be done by scanning just one, reference mirror segment in piston to identify where the sidelobe height is a maximum, $H_{max}$, for each of the other N-1 (fixed) mirror segments, to measure the relative piston error between the scanned mirror segment and each of the other mirror segments. For each fixed mirror segment the piston location of $H_{max}$ (for the MTF sidelobe corresponding to interference between that mirror segment and the reference mirror segment) measures the piston error to the reference mirror segment ($\beta = 0$). Thus in implementations the actuator control system moves one the mirror segments whilst keeping the other mirror segments fixed to obtain position correction information for each of the other mirror segments. The actuator control system can control the set of actuators using the position correction information to correct the relative positions of the mirror segments in piston, i.e. to correct the measured errors. This can reduce OPDs to $\beta \ll \lambda$.

In some implementations the light source includes a fine alignment light source to provide fine alignment light with a coherence length shorter than a coherence length of the metrology light used initially to find the fringes. The actuator control system may then be configured to use interference fringes from the fine alignment light after an initial coarse alignment, i.e. after obtaining interference fringes from the metrology light, to control the set of actuators to refine alignment of the mirror segments in piston.

Optionally, during the above-described cophasing process tip/tilt alignment of the mirror segments may be rechecked at intervals, and corrected if needed.

An advantage of reflective facets is that they are compatible with the use of broadband metrology light. However a diffractive approach can monitor the main, imaging part of each mirror segment surface and, in implementations, substantially the entire imaging surface of the primary mirror. In some implementations both reflective and diffractive metrology may be used to obtain complementary information. In this case the mirror facets and diffraction grating may be arranged so that the sub-images/spots they respectively generate are spatially separated from one another at an image sensor of the metrology system, to avoid mixing signals from the reflective and diffractive approaches. Also or instead the separation may be achieved spectrally (using different wavelengths) or temporally (e.g. by time-multiplexing).

Thus one or more of the mirror segments in a telescope as described above may have a diffraction grating on the segment surface, e.g. part of a pattern of concentric rings that, as a whole, extends over the set of mirror segments. The diffraction grating may be faint, in that it may diffract only a small proportion of the metrology light e.g. less than 10%. Such a diffraction grating may also be formed by diamond turning, or by lithography e.g. e-beam or UV/optical lithography, or by using holography to manufacture a coating. The light source may include a monochromatic light source, e.g. a point source, e.g. a laser light source, for diffractive characterization of the primary mirror, and a diffracted light metrology system; these may be located at conjugate optical positions defined by the diffraction grating. The width of the lines and pitch of the grating may be chosen to direct light from the light source to the diffracted light metrology system.

The metrology system may include a diffracted light metrology system to characterize the diffracted light from the monochromatic light source for determining a degree of optical alignment of the telescope, and optionally for aligning the telescope.

For example, in implementations the diffracted light from each mirror segment generates a diffraction pattern comprising a spot in the metrology image plane and these spots can be stacked by moving the mirror segments in tip/tilt. This is similar to the previously described approach using reflective facets, but the diffraction grating can cover a larger area than a facet and generate a smaller spot in the captured image, facilitating more accurate alignment.

As another example a shape of the diffraction pattern, i.e. of an image of the diffracted light captured by the image sensor of the metrology system, may be used to determine a measure of decentre of one or more of the mirror segments from an optical axis of the telescope. Here decentre refers to translational misalignment of a mirror segment perpendicular to an optical axis of the telescope. Such decentring elongates the diffraction pattern (diffracted image/spot).

In another example a diffracted light metrology system may comprise a wavefront metrology system such as a Shack-Hartman wavefront sensor, to characterize a wavefront of the diffracted light. A Shack-Hartman wavefront sensor can measure the local tip-tilt of the wavefront from the displacement of a focussed spot of metrology light, and hence can also be used to correct tip/tilt of the mirror segments.

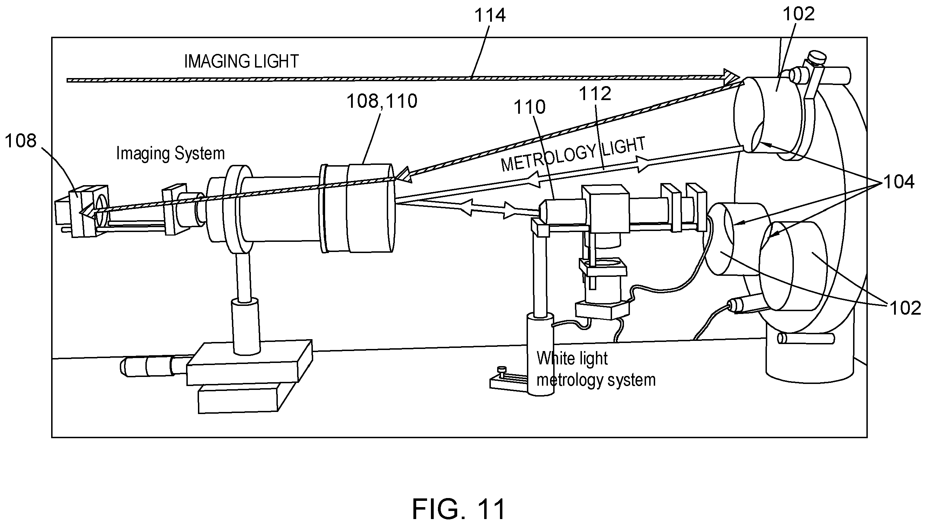

Figure 11 illustrates an example prototype telescope configured as described above. The techniques described herein can be used with any telescope that has a segmented primary mirror, and are useful for both small and large telescopes. The techniques can be used to obtain close to diffraction-limited resolution, and are thus particularly useful for telescopes that form an image of an object at which the telescope is directed. The techniques are not limited to visible light telescopes and can also be used e.g. for any wavelength range of IR telescope, and for UV telescopes. The techniques can be used at the same time as the telescope is imaging a target scene and in some implementations the metrology and alignment system may run continuously. They have some particular advantages for space-based telescopes e.g. earth imaging telescopes.

No doubt many other effective alternatives will occur to the skilled person. It will be understood that the invention is not limited to the described embodiments and encompasses modifications apparent to those skilled in the art lying within the scope of the claims appended hereto.

**Claims**

1. A telescope (50) with an optical alignment system, comprising:

   a segmented primary mirror (52, 102), the segmented primary mirror having a plurality of mirror segments (102a, 102b, 102c),
   each mirror segment having a segment surface defining part of an imaging surface of the primary mirror;
   an internal light source (109); and
   an internal metrology system (60, 110);
   each mirror segment having a mirror facet (104), wherein the mirror facet is a reflective surface that is angled with respect to the segment surface of the mirror segment and configured to reflect light from the internal light source in a direction different from light reflected from the segment surface, the reflected light being directed toward the internal metrology system to determine an optical alignment of the mirror segments,
wherein a direction of light reflected from the mirror facet defines an orientation of the segment surface of the mirror segment, and
wherein the mirror facet is configured to reflect light in a different direction to light reflected from the segment surface of the mirror segment;

   the internal light source configured to illuminate the mirror facet of each mirror segment; and
   the internal metrology system located to receive light from the light source after reflection by the mirror facet of each mirror segment, wherein the received light characterizes an optical alignment of the mirror segments.

2. The telescope of claim 1 wherein the mirror facets have a curved surface to focus light from the light source to the metrology system.

3. The telescope of any of claims 1-2 wherein the light source comprises a source of metrology light that has a coherence length that is less than a depth of focus of the telescope.

4. The telescope of any of claims 1-3 wherein the light source comprises a source of metrology light that has a coherence length that is less than 100 zm or less than 10 zm.

5. The telescope of any preceding claim further comprising:

   a set of one or more actuators; and an actuator control system coupled to the metrology system and to the set of actuators;
   wherein each of one or more of the mirror segments has a respective actuator (120a, 120b, 120c) to move the mirror segment;
   wherein the metrology system is configured to capture an image of the received light from the light source after reflection by each of the mirror facets; and
   wherein the actuator control system (130) is configured to control the set of actuators dependent
   upon the captured image to move the one or more mirror segments to align the reflections from the mirror facets of the mirror segments.

**6.** The telescope of claim 5

wherein each of the one or more actuators is configured to tilt the respective mirror segment; and
wherein the actuator control system is configured to control the set of actuators dependent upon the captured image to tilt the one or more mirror segments to align the reflections from the mirror facets of the mirror segments such that the reflections are coincident with one another in the captured image.

**7.** The telescope of claim 6 wherein the metrology system comprises a first image sensor to capture the image of the received light from the light source after reflection by each of the mirror facets, and a second an image sensor configured to capture a defocussed image of the received light, such that when the reflections are coincident with one another the reflections captured by the defocussed image are spatially separate from one another.

**8.** The telescope of claim 5, 6 or 7 when dependent upon claim 3 or 4, wherein each of the one or more actuators is configured to move the respective mirror segment in piston; and wherein the actuator control system is configured to control the set of actuators dependent upon the captured image to move the one or more mirror segments in piston to obtain one or more interference fringes in the captured image.

**9.** The telescope of any one of claims 8wherein the light source further comprises a fine alignment light source to provide fine alignment light with a coherence length shorter than a coherence length of the metrology light; and wherein the actuator control system is configured to use interference fringes from the fine alignment light after obtaining interference fringes from the metrology light to control the set of actuators to refine
alignment of the mirror segments in piston.

**10.** The telescope of any preceding claim wherein one or more of the mirror segments has a diffraction grating on the segment surface, the light source includes a monochromatic source, and further comprising:

a diffracted light metrology system;
wherein the light source and the a diffracted light metrology system are located at conjugate optical positions defined by the diffraction grating; and
the diffracted light metrology system is configured to characterize the diffracted light from the monochromatic light source for determining a degree of optical alignment of the telescope.

**11.** The telescope of claim 1O wherein the diffracted light metrology system is configured to characterize the diffracted light to determine a measure of decentre of one or more of the one the mirror segments from an optical axis of the telescope.

**12.** A method of aligning a telescope (50), the telescope comprising:

a segmented primary mirror (52, 102), the segmented primary mirror having a plurality of mirror segments (102a, 102b, 102c), each mirror segment having a segment surface defining part of an imaging surface of the primary mirror;
each mirror segment having a mirror facet (104), wherein a direction of light reflected from the mirror facet defines an orientation of the segment surface of the mirror segment, and wherein the mirror facet is configured to reflect light in a different direction to light reflected from the segment surface of the mirror segment;
the method comprising:
using an internal light source (109) of the telescope to illuminate the mirror facet of each mirror segment; moving one or more of the mirror segments to align a reflection from the mirror facet of each mirror segments by using an internal metrology system (60, 110) of the telescope.

**13.** The method of claim 12 wherein the aligning comprises correcting tilt misalignments of the mirror segments; and wherein the moving comprises tilting one or more of the mirror segments such that reflections from the mirror facet of each mirror segment are coincident.

**14.** The method of claim 12 or 13 wherein the aligning comprises correcting translational misalignments of the mirror segments along an optical axis of the telescope; and wherein the moving comprises moving one or more of the mirror segments in piston such that reflections from the mirror facet of each mirror create interference fringes.

**15.** The method of any of claims 12-14 wherein the light source includes a monochromatic light source; wherein the mirror segments have a diffraction grating on the segment surface to diffract light from the monochromatic light source to generate a
diffraction pattern; determining one or more characteristics of the diffraction pattern; and correcting a mirror segment misalignment by moving one or more of the mirror segments in response to the one or more characteristics.

**Patentansprüche**

1. Teleskop (50) mit einem optischen Ausrichtungssystem, mit:

    einem segmentierten Primärspiegel (52,102), wobei der segmentierte Primärspiegel eine Vielzahl von Spiegelsegmenten (102a, 102b, 102c) aufweist, wobei jedes Spiegelsegment eine Segmentoberfläche aufweist, die einen Teil einer Abbildungsoberfläche des Primärspiegels definiert;
    einer internen Lichtquelle (109); und
    einem internen Messtechniksystem (60, 110), wobei jedes Spiegelsegment eine Spiegelfacette (104) aufweist, wobei die Spiegelfacette eine reflektierende Oberfläche ist, die in Bezug auf die Segmentoberfläche des Spiegelsegments abgewinkelt und dazu eingerichtet ist, um Licht von der internen Lichtquelle in einer Richtung verschieden vom von der Segmentoberfläche reflektiertem Licht zu reflektieren, wobei das reflektierte Licht in Richtung zu dem internen Messtechniksystem gerichtet ist, um eine optische Ausrichtung der Spiegelsegmente zu bestimmen, wobei eine Richtung von von der Spiegelfacette reflektiertem Licht eine Orientierung der Segmentoberfläche des Spiegelsegments definiert, und
    wobei die Spiegelfacette dazu eingerichtet ist, um Licht in einer Richtung verschieden von der Segmentoberfläche des Spiegelsegments reflektiertem Licht zu reflektieren,
    wobei die interne Lichtquelle dazu eingerichtet ist, um die Spiegelfacette jedes Spiegelsegments zu beleuchten; und
    wobei das interne Messtechniksystem derart angeordnet ist, um Licht von der Lichtquelle nach Reflektion durch die Spiegelfacette jedes Spiegelsegments zu empfangen, wobei das empfangene Licht eine optische Ausrichtung der Spiegelsegmente charakterisiert.

2. Teleskop nach Anspruch 1, wobei die Spiegelfacetten eine gekrümmte Oberfläche aufweisen, um Licht von der Lichtquelle zu dem Messtechniksystem zu fokussieren.

3. Teleskop nach einem der Ansprüche 1 bis 2, wobei die Lichtquelle eine Quelle von Messtechniklicht aufweist, das eine Kohärenzlänge geringer als eine Schärfentiefe des Teleskops aufweist.

4. Teleskop nach einem der Ansprüche 1 bis 3, wobei die Lichtquelle eine Quelle von Messtechniklicht aufweist, das eine Kohärenzlänge geringer als 100 zm oder geringer als 10 zm aufweist.

5. Teleskop nach einem der vorhergehenden Ansprüche, ferner mit:

    einem Satz von einem oder mehreren Aktuatoren; und
    einem Aktuatorsteuersystem, das mit dem Messtechniksystem und dem Satz von Aktuatoren gekoppelt ist,
    wobei jedes von einem oder mehreren der Spiegelsegmente einen jeweiligen Aktuator (120a, 120b, 120c) aufweist, um das Spiegelsegment zu bewegen,
    wobei das Messtechniksystem dazu eingerichtet ist, um ein Bild des empfangenen Lichts von der Lichtquelle nach Reflektion durch jeden der Spiegelfacetten aufzunehmen, und
    wobei das Aktuatorsteuersystem (130) dazu eingerichtet ist, um den Satz von Aktuatoren abhängig von dem aufgenommenen Bild zu steuern, um das eine oder die mehreren Spiegelsegmente zu bewegen, um die Reflektionen von den Spiegelfacetten der Spiegelsegmente auszurichten.

6. Teleskop nach Anspruch 5,

    wobei jeder des einen oder der mehreren Aktuatoren dazu eingerichtet ist, um das jeweilige Spiegelsegment zu kippen, und
    wobei das Aktuatorsteuersystem dazu eingerichtet ist, um den Satz von Aktuatoren abhängig von dem aufgenommenen Bild zu steuern, um das eine oder die mehreren Spiegelsegmente zu kippen, um die Reflektionen von den Spiegelfacetten der Spiegelsegmente derart auszurichten, dass die Reflektionen miteinander in dem aufgenommenen Bild zusammenfallen.

7. Teleskop nach Anspruch 6, wobei das Messtechniksystem einen ersten Bildsensor, um das Bild des empfangenen Lichts von der Lichtquelle nach Reflektion durch jeder der Spiegelfacetten aufzunehmen, und
    einen zweiten Bildsensor, der dazu eingerichtet ist, um ein defokussiertes Bild des empfangenen Lichts derart aufzunehmen, dass wenn die Reflektionen miteinander zusammenfallen, die durch das defokussierte Bild aufgenommenen Reflektionen räumlich voneinander getrennt sind, aufweist.

8. Teleskop nach Anspruch 5, 6 oder 7 wenn abhängig von Anspruch 3 oder 4, wobei jeder des einen oder der mehreren Aktuatoren dazu eingerichtet ist, um das jeweilige Spiegelsegment kolbenartig zu bewegen, und
    wobei das Aktuatorsteuersystem dazu eingerichtet ist, um den Satz von Aktuatoren abhängig von dem aufgenommenen Bild zu steuern, um das eine oder die mehreren Spiegelsegmente kolbenartig zu bewegen, um einen oder mehrere Interferenzstreifen in dem aufgenommenen Bild zu erhalten.

9. Teleskop nach Anspruch 8, wobei die Lichtquelle ferner eine Feinausrichtungslichtquelle aufweist, um Feinausrichtungslicht mit einer Kohärenzlänge geringer als eine Kohärenzlänge des Messtechniklichts, bereitzustellen, und wobei das Aktuatorsteuersystem dazu eingerichtet ist, um Interferenzmuster von dem Feinausrichtungslicht nach Erhalten von Interferenzmuster von dem Messtechniklicht zu verwenden, um den Satz von Aktuatoren zu steuern, um Ausrichtung der Spiegelsegmente kolbenartig zu verfeinern.

10. Teleskop nach einem der vorhergehenden Ansprüche, wobei eines oder mehrere der Spiegelsegmente ein Beugungsgitter an der Segmentoberfläche aufweist, wobei die Lichtquelle eine monochromatische Quelle aufweist, ferner mit einem Beugungslichtmesstechniksystem,

wobei die Lichtquelle und das Beugungslichtmesstechniksystem an konjungierten optischen Positionen angeordnet sind, die durch das Beugungsgitter definiert sind; und wobei das Beugungslichtmesstechniksystem dazu eingerichtet ist, um das Beugungslicht von der monochromatischen Lichtquelle zu charakterisieren, um ein Grad einer optischen Ausrichtung des Teleskops zu bestimmen.

11. Teleskop nach Anspruch 10, wobei das Beugungslichtmesstechniksystem dazu eingerichtet ist, um das Beugungslicht zu charakterisieren, um ein Maß einer Dezentrierung eines oder mehrerer des einen der Spiegelsegmente von einer optischen Achse des Teleskops zu bestimmen.

12. Verfahren eines Ausrichtens eines Teleskops (50), wobei das Teleskop aufweist:

einen segmentierten Primärspiegel (52, 102), wobei der segmentierte Primärspiegel eine Vielzahl von Spiegelsegmenten (102a, 102b, 102c) aufweist, wobei jedes Spiegelsegment eine Segmentoberfläche aufweist, die einen Teil einer Abbildungsoberfläche des Primärspiegels definiert; wobei jedes Spiegelsegment eine Spiegelfacette (104) aufweist, wobei eine Richtung von von der Spiegelfacette reflektiertem Licht eine Orientierung der Segmentoberfläche des Spiegelsegments definiert, und wobei die Spiegelfacette dazu eingerichtet ist, um Licht in einer Richtung verschieden von von der Segmentoberfläche des Spiegelsegments reflektiertem Licht zu reflektieren; wobei das Verfahren aufweist:

ein Verwenden einer internen Lichtquelle (109) des Teleskops, um die Spiegelfacette jedes Spiegelsegments zu beleuchten; und ein Bewegen eines oder mehrerer der Spiegelsegmente, um eine Reflektion von der Spiegelfacette jedes Spiegelsegments durch Verwenden eines internen Messtechniksystems (60, 110) des Teleskops auszurichten.

13. Verfahren nach Anspruch 12, wobei das Ausrichten ein Korrigieren von Kippfehlausrichtungen der Spiegelsegmente aufweist; und wobei das Bewegen ein Kippen eines oder mehrerer der Spiegelsegmente derart aufweist, dass Reflektionen von der Spiegelfacette jedes Spiegelsegments zusammenfallen.

14. Verfahren nach Anspruch 12 oder 13, wobei das Ausrichten ein Korrigieren von Translationsfehlausrichtungen der Spiegelsegmente entlang einer optischen Achse des Teleskops aufweist; und wobei das Bewegen ein Bewegen eines oder mehrerer der Spiegelsegmente kolbenartig derart aufweist, dass Reflektionen von der Spiegelfacette jedes Spiegels Interferenzmuster erzeugt.

15. Verfahren nach einem der Ansprüche 12 bis 14, wobei die Lichtquelle eine monochromatische Lichtquelle aufweist, wobei die Spiegelsegmente ein Beugungsgitter an der Segmentoberfläche aufweisen, um Licht von der monochromatischen Lichtquelle zu beugen, um ein Beugungsmuster zu erzeugen; mit

einem Bestimmen einer oder mehrerer Charakteristiken des Beugungsgitters; und einem Korrigieren einer Spiegelsegmentfehlausrichtung durch ein Bewegen eines oder mehrerer der Spiegelsegmente in Reaktion auf die eine oder mehreren Charakteristiken.

**Revendications**

1. Télescope (50) avec un système d'alignement optique, comprenant :

un miroir primaire segmenté (52, 102), le miroir primaire segmenté comportant une pluralité de segments de miroir (102a, 102b, 102c), chaque segment de miroir ayant une surface de segment définissant une partie d'une surface d'imagerie du miroir primaire ; une source lumineuse interne (109) ; et

un système de métrologie interne (60, 110) ; chaque segment de miroir comportant une facette de miroir (104), dans lequel la facette de miroir est une surface réfléchissante qui forme un angle par rapport à la surface segmentée du segment de miroir et qui est configurée pour réfléchir la lumière provenant de la source lumineuse interne dans une direction différente de celle de la lumière réfléchie par la surface segmentée, la lumière réfléchie étant dirigée vers le système de métrologie interne afin de déterminer un alignement optique des segments de miroir, dans lequel une direction de la lumière réfléchie par la facette de miroir définit une orientation de la surface de segment du segment de miroir, et dans lequel la facette de miroir est configurée pour réfléchir la lumière dans une direction différente de celle de la lumière réfléchie par la surface de segment du segment de miroir ;

la source lumineuse interne étant configurée pour éclairer la facette de miroir de chaque segment de miroir ; et le système de métrologie interne étant situé de manière à recevoir la lumière provenant de la source lumineuse après réflexion par la facette de miroir de chaque segment de miroir, dans lequel la lumière reçue caractérise un alignement optique des segments de miroir.

2. Le télescope selon la revendication 1, dans lequel les facettes de miroir ont une surface courbe pour focaliser la lumière provenant de la source lumineuse vers le système de métrologie.

3. Le télescope selon l'une quelconque des revendications 1 à 2, dans lequel la source lumineuse comprend une source de lumière métrologique qui a une longueur de cohérence inférieure à la profondeur de champ du télescope.

4. Le télescope selon l'une quelconque des revendications 1 à 3, dans lequel la source lumineuse comprend une source de lumière métrologique qui a une longueur de cohérence inférieure à 100 zm ou inférieure à 10 zm.

5. Le télescope de l'une quelconque des revendications précédentes comprenant en outre :

un ensemble d'un ou plusieurs actionneurs ; et un système de commande d'actionneurs couplé au système de métrologie et à l'ensemble d'actionneurs ;

dans lequel chacun des un ou plusieurs segments de miroir comporte un actionneur respectif (120a, 120b, 120c) pour déplacer le segment de miroir ;

dans lequel le système de métrologie est configuré pour capturer une image de la lumière reçue de la source lumineuse après réflexion par chacune des facettes du miroir; et dans lequel le système de commande d'actionneurs (130) est configuré pour commander l'ensemble d'actionneurs en fonction de l'image capturée afin de déplacer le ou les segments de miroir pour aligner les réflexions provenant des facettes des segments de miroir.

6. Le télescope selon la revendication 5, dans lequel chacun des un ou plusieurs actionneurs est configuré pour incliner le segment de miroir respectif ; et dans lequel le système de commande d'actionneurs est configuré pour commander l'ensemble d'actionneurs en fonction de l'image capturée afin d'incliner le ou les segments de miroir pour aligner les réflexions provenant des facettes de miroir des segments de miroir de telle sorte que les réflexions coïncident les unes avec les autres dans l'image capturée.

7. Le télescope selon la revendication 6, dans lequel le système de métrologie comprend un premier capteur d'image pour capturer l'image de la lumière reçue de la source lumineuse après réflexion par chacune des facettes du miroir, et un deuxième capteur d'image configuré pour capturer une image défocalisée de la lumière reçue, de telle sorte que lorsque les réflexions coïncident les unes avec les autres, les réflexions capturées par l'image défocalisée sont spatialement séparées les unes des autres.

8. Le télescope selon la revendication 5, 6 ou 7 lorsqu'il dépend de la revendication 3 ou 4, dans lequel chacun des un ou plusieurs actionneurs est configuré pour déplacer le segment de miroir respectif en piston ; et dans lequel le système de commande d'actionneur est configuré pour commander l'ensemble d'actionneurs en fonction de l'image capturée afin de déplacer le ou les segments de miroir en piston pour obtenir une ou plusieurs franges d'interférence dans l'image capturée.

9. Le télescope selon l'une quelconque des revendications 8, dans lequel la source lumineuse comprend en outre une source lumineuse d'alignement fin pour fournir une lumière d'alignement fin avec une longueur de cohérence plus courte que la longueur de cohérence de la lumière métrologique ; et dans lequel le système de commande des actionneurs est configuré pour utiliser les franges d'interférence provenant de la lumière d'alignement fin après avoir obtenu les franges d'interférence provenant de la lumière de métrologie afin de commander l'ensemble d'actionneurs pour affiner l'alignement des segments de miroir dans le piston.

**10.** Le télescope de n'importe quelle revendication précédente dans lequel un ou plusieurs des segments de miroir ont un réseau de diffraction sur la surface du segment, la source lumineuse comprend une source monochromatique, et comprenant en outre :

un système de métrologie à lumière diffractée ; dans lequel la source lumineuse et le système de métrologie de lumière diffractée sont situés à des positions optiques conjuguées définies par le réseau de diffraction ; et
le système de métrologie de lumière diffractée est configuré pour caractériser la lumière diffractée provenant de la source de lumière monochromatique afin de déterminer un degré d'alignement optique du télescope.

**11.** Télescope selon la revendication 10, dans lequel le système de métrologie à lumière diffractée est configuré pour caractériser la lumière diffractée afin de déterminer une mesure de décentrage d'un ou de plusieurs des segments de miroir par rapport à un axe optique du télescope.

**12.** Procédé d'alignement d'un télescope (50), le télescope comprenant :

un miroir primaire segmenté (52, 102), le miroir primaire segmenté comportant une pluralité de segments de miroir (102a, 102b, 102c), chaque segment de miroir comportant une surface de segment définissant une partie d'une surface d'imagerie du miroir primaire ;
chaque segment de miroir comportant une facette de miroir (104), dans lequel une direction de la lumière réfléchie par la facette de miroir définit une orientation de la surface de segment du segment de miroir, et dans lequel la facette de miroir est configurée pour réfléchir la lumière dans une direction différente de celle de la lumière réfléchie par la surface de segment du segment de miroir ;
le procédé comprenant :
l'utilisation d'une source lumineuse interne (109) du télescope pour éclairer la facette de miroir de chaque segment de miroir ; le déplacement d'un ou plusieurs segments de miroir pour aligner une réflexion provenant de la facette de miroir de chaque segment de miroir à l'aide d'un système de métrologie interne (60, 110) du télescope.

**13.** Procédé selon la revendication 12, dans lequel l'alignement comprend la correction des désalignements d'inclinaison des segments de miroir ; et dans lequel le déplacement comprend l'inclinaison d'un ou plusieurs segments de miroir de telle sorte que les réflexions provenant de la facette de miroir de chaque segment de miroir coïncident.

**14.** Le procédé selon la revendication 12 ou 13 dans lequel l'alignement comprend la correction des désalignements translationnels des segments de miroir le long d'un axe optique du télescope ; et dans lequel le déplacement comprend le déplacement d'un ou plusieurs segments de miroir en piston de telle sorte que les réflexions provenant de la facette de miroir de chaque miroir créent des franges d'interférence.

**15.** Le procédé de l'une quelconque des revendications 12 à 14, dans lequel la source lumière comprend une source lumière monochromatique ; dans lequel les segments de miroir ont un réseau de diffraction sur la surface du segment pour diffracter la lumière provenant de la source lumière monochromatique afin de générer un motif de diffraction ; déterminer une ou plusieurs caractéristiques du motif de diffraction ; et corriger un désalignement des segments de miroir en déplaçant un ou plusieurs des segments de miroir en réponse à la ou aux caractéristiques.

52

Segmented
primary
mirror

Metrology
system

58

Imaging
system

56

60

54

50

FIG. 1

FIG. 2

FIG. 3

FIG. 4

FIG. 5a

FIG. 5b

FIG. 6b

FIG. 6d

FIG. 6a

FIG. 6c

Pupil of Segment Pair

FIG. 7a

PSF of Segment Pair

FIG. 7b

MTF of Segment Pair

FIG. 7c

Cross Section of MTF sidelobes

FIG. 7d

FIG. 8

FIG. 9b

FIG. 9a

FIG. 9c

FIG. 10a

FIG. 10b

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021018634 A
- US 5274479 A
- WO 2016126302 A
- US 20180074236 A

**Non-patent literature cited in the description**

- **MCCANN et al.** A new mirror alignment system for the VERITAS telescopes. *Astroparticle Physics*, 2010, vol. 32, 325-329
- **VAZQUEZ-MONTIEL**. *Method For Facets' Alignment For The High-Flux Solar Furnace At Cie-Unam In Temixco, Mexico. First Stage*, http://www.concentracionsolar.org.mx/images/pdf/memorias/05 sp12 sv.pdf
- **KISHNER**. High-bandwidth alignment sensing in active optical systems. *Proc. SPIE 1532, Analysis of Optical Structures*, 01 December 1991
- **ZHAO et al.** Simultaneous multi-piston measurement method in segmented telescopes. *Optics Express*, 02 October 2017, vol. 25 (20), 24540